# EUROPEAN PATENT SPECIFICATION

(11) **EP 1 069 080 B1**
(45) Date of publication and mention of the grant of the patent: **30.07.2003**
(21) Application number: 00201621.0
(22) Date of filing: 05.05.2000
(51) Int. Cl.: C03B 5/04, C03B 5/20

(54) **Glassmaking tank furnace having a particular floor profile between sill and neck**
Glasschmelzwannenofen mit einem bestimmten Bodenprofil zwischen Schwelle und Hals
Four à bassin de fusion de verre à profil de sole particulier entre seuil et corset

(30) Priority: 15.07.1999 GB 9916668
(43) Date of publication of application: 17.01.2001
(73) Proprietor: GLAVERBEL, 1170 Bruxelles (BE)
(72) Inventor: Monville, Bernard, 5380 Fernelmont (BE); Tassignon, Emmanuel, 1702 Groot-Bijgaarden (BE)
(74) Representative: Le Vaguerèse, Sylvain

(56) References cited:
- EP-A- 0 086 859
- EP-A- 0 133 409
- FR-A- 1 362 442
- FR-A- 2 348 161
- FR-A- 2 737 487
- GB-A- 2 204 310
- US-A- 2 064 546
- US-A- 2 203 269
- US-A- 4 012 218
- PATENT ABSTRACTS OF JAPAN vol. 97, no. 3, 31 March 1997 (1997-03-31) -& JP 08 290918 A (ISHIZUKA GLASS CO. LTD.), 5 November 1996 (1996-11-05)

## Description

This invention relates to a glassmaking furnace such as used in the manufacture of flat glass. The furnace has an elongated tank for melting, fining and conditioning (homogenising) the glass and the tank according to the invention has a modified floor shape to improve the flow pattern of glass.

Traditional flat glass manufacturing tanks include a melting zone, a fining zone, a neck portion of narrower width than its adjacent zones, a conditioning zone and an exit channel through which the product glass is fed to a sheet or ribbon forming unit such as a float tank. Most or all of the heat for melting raw material and keeping it in a molten condition is supplied from above, typically by gas-fuelled or oil-fuelled burners. Ensuring that heat reaches all of the material to be melted and that a sufficiently high glass temperature is maintained in the tank poses a number of problems. Great reliance is therefore placed on establishing a glass flow pattern in the tank which achieves sufficient melting and good homogenisation to produce good quality glass.

Control of the flow pattern provides a useful means of regulating the temperature throughout the tank. It is important to avoid the presence both of unduly hot regions within the glass and of unduly cold spots: overheated regions risk damaging the refractory material of which the tank is constructed; cold regions can result in solidification or devitrification of the glass. Excessive variations in temperature, especially downstream of the melting zone, also increase the risk of imperfections in the glass such as bubbles or reams.

One well-known means for assisting the flow control is a lateral sill on the base of the tank, typically located between the melting zone and fining zone. FR-A-2737487 describes such a sill, how it can be used to divide the tank into upstream and downstream sections, and illustrates typical flow patterns created in the respective sections.

The floor of each of the zones and portions in the tank is usually horizontal or substantially so, although proposals have been made for shaping of the floor to enhance the glass flow patterns. GB-A-1513653 proposes that a portion of the floor of the furnace be inclined upwardly towards the floor of the exit channel, with a view to forming a neutral zone where the forward and return currents separate. It further proposes that water-cooled pipes be disposed beneath the inclined floor portion so as to promote clean separation of the forward and return currents.

US Patent 2064546 includes an upwardly-inclined floor in the "working end" - as distinct from the "melting end" - of a glass melting tank. Among several objectives it seeks to regulate the temperature at the working end, facilitating the return circulation of cooler glass. In one option it proposes a deep trough extending transversely across the working section of the tank bottom and communicating with longitudinal inclined troughs adjacent to the side walls of the tank. The section of the tank bottom leading to the lateral trough slants towards the transverse trough so as to promote lateral flow of glass to the longitudinal troughs.

Problems arise in ensuring temperature control in glass. A particular problem arises from the glass near the tank floors which may be colder, creating a risk of solidification or devitrification. The problems have become more significant with increased demand for special types of coloured glass, for example for vehicle windows, which has made it increasingly necessary to undertake production in large scale plant rather than in the small dedicated furnaces used hitherto. Coloured glass being less heat-transmissive than clear glass, makes for problems, mostly in the conditioning zone, in ensuring uniform cooling and in increasing the risk of reams in the melt.

The present invention relates to a tank configuration with improved glass flow patterns.

According to the present invention there is provided a glassmaking furnace comprising an elongated tank for molten glass, the said tank including in linear sequence a melting zone, a fining zone, a neck portion, a conditioning zone and an exit channel for removal of product glass, and further including a sill which extends transversely across the furnace at or close to the upstream end of the fining zone, characterised in that in the direction downstream of the sill the tank has a floor with a shaped profile such that the depth of the tank increases progressively from the top of the sill to the neck portion and decreases progressively from the neck portion to the exit channel.

The tank floor thus has a shallow U-shaped profile downstream of the sill. This shape has been found to eliminate or substantially reduce the presence in the tank of "dead zones" of overheated or underheated glass. The absence of a downward step in the base profile immediately downstream of the sill is especially helpful in that it eliminates the dead zone normally created in this vicinity.

The tank of the invention offers a considerable advantage in achieving reduced dead zones without resorting to additional heating within the tank. The need for heating electrodes, which are expensive and prone to corrosion, is eliminated.

The raising of the floor of the conditioning zone may increase heat losses from the floor, thereby tending to reduce the glass temperature and the circulation currents. However, because heat does not readily penetrate through coloured glass to the deep portions of the conditioning zone in a traditional furnace, raising the mean level of the floor increases both the mean temperatures and the circulation in the conditioning zone.

It is further found that the shallow U-shaped profile of the invention considerably reduces any solidification zones downstream of the sill. In the fining zone the reduced depth of glass compared with traditional furnaces improves the required release of gas bubbles from the glass.

The shaped profile of the tank floor downstream of the sill should be as smooth as technically feasible consistent with its being constructed of individual refractory blocks. Thus small steps between adjacent blocks are generally acceptable but significant steps should be avoided.

The floor of the neck portion is preferably horizontal, thereby maintaining a uniform glass depth through the neck and thus facilitating the glass flow therethrough.

An increase in glass temperature relative to traditional furnaces is observed at the floor of the neck. This may result from return currents from the conditioning zone being warmer than in the traditional furnace, possibly because side currents in the conditioning zone descend more quickly than hitherto.

A further effect of the shallow profile of the invention is that higher maximum temperatures are attained by the forward current downstream of the sill. Globally, the fining of the glass is better.

The profile from the sill top to the neck opening may be linear but preferably follows a gentle convex curve from an initially relatively steep slope from the sill top to substantially horizontal where it meets the floor of the neck.

With regard to the floor profile from the neck up to the furnace exit this is preferably linear. There appear to be advantages in increasing the base level of the conditioning zone as quickly as possible, although not to the extent of giving it a concave curve or introducing any significant steps into its profile.

With the shaped longitudinal floor profile of the invention there is no need for complex floor shapes across the width of the tank. Indeed the lateral shape of the tank floor may be slightly inclined but is preferably substantially horizontal, thereby giving a uniform depth of glass across the width. A slight curvature can be provided if desired along the lines where the floor meets the side walls but this is not found to give a significant improvement in the glass flow pattern.

It is important in the conditioning zone to control the rate of heat release through the glass surface. Unduly rapid cooling from the surface tends to result in unacceptable thermal reams in the glass product. The level of risk can be observed by monitoring the Rayleigh number across the area of the tank. The floor profile of the invention provides advantages in reducing surface heat release in that with the raised sole of the conditioning zone, the glass is cooled more by the floor and tank wall than via the surface. In particular the temperature level at the exit channel is much less, with consequent reduction in the risk of reams being formed. This is in part because the depth of the glass in the tank is reduced, increasing cooling through the floor relative to cooling through the surface.

The tank profile according to the invention further provides advantages in regard to the risk of devitrification in the glass. In any glass tank below a temperature of about 1000°C there exists a significant risk of devitrification, and especially so in the conditioning zone. The stronger return currents through the neck in tanks according to the invention have the beneficial effect of moving upstream the region with the greatest devitrification potential, thereby allowing any devitrified material to redissolve in the fining zone. The quantity of any devitrified material downstream of the sill is thus reduced, together with the risk that devitrified material might contaminate the exit channel.

The invention is described below with reference to the accompanying figures, in which:
Figure 1 is a schematic sectional side view of a glassmaking tank according to the invention;
Figure 2 is a schematic plan view of the glassmaking tank of Figure 1.

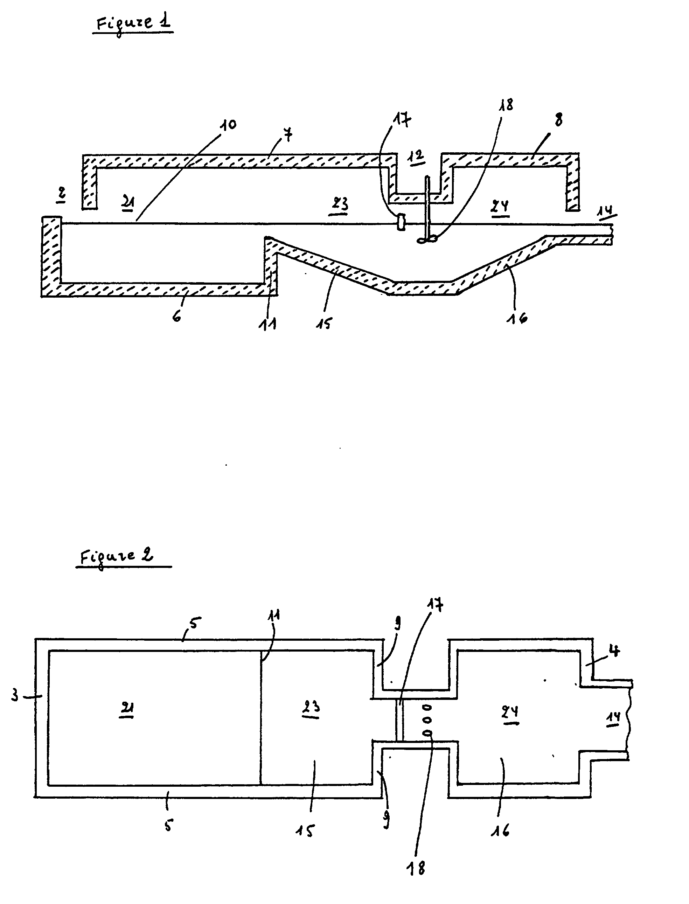

The illustrated tank, which includes molten glass up to the line 10, has overall glass flows from left to right. It comprises a raw material inlet 2, an upstream end wall 3, downstream end walls 4, parallel side walls 5, a floor 6 and a roof (7, 8). A lateral sill 11 is disposed on the floor 6 slightly ahead of the midway position along the tank. Shoulders 9 project into the tank to form a neck 12 slightly beyond the midway position of the tank. A glass exit channel 14 is formed in the downstream end wall 4. The walls 3,4,5, floor 6, roof, sill 11 and neck shoulders 9 are formed of refractory blocks.

The upper surface portion of the sole 6 upstream of the sill 11 is horizontal in both the longitudinal and lateral directions. From the top of the sill 11 the floor 6 has an portion 15 inclined downwards in a longitudinal direction to the start of the neck 12, which again has a horizontal surface. Downstream of the neck 12 the floor 6 has an portion 16 inclined upwards in a longitudinal direction to the exit channel 14. The portions 15, 16 are not inclined in the direction at right angles to the side walls 5.

Gas-fuelled burners (not shown) are located at the upstream end of the tank, above the glass line. At the upper part of the neck portion 12 there can be a horizontal skim bar 17 arranged at a slight angle to the side walls, followed by mixers 18.

The tank thus provides in sequence a melting zone 21, a fining zone 23, a neck 12, a conditioning zone 24 and an exit channel 14.

In a typical glass-forming operation, raw siliceous material including if required a proportion of pigment is melted in the zone 21 by the intense heat of the gas burners and flows in a generally downstream direction. The sill 11 encourages a return flow of material towards the burners to complete the melting. Fining of the glass, primarily the escape of bubbles, begins as the glass leaves the melting zone 21. The fining zone 23 tends to extend slightly upstream of the sill 11 as well as downstream to the neck 12. The skim bar 17 removes unwanted residues from the glass surface as it passes through the neck 12. The mixers 18 provide a degree of agitation to assist the homogenisation of the glass reaching the conditioning zone 24. Homogenisation of the glass continues as it passes through the conditioning zone 24 and exits through the channel 14.

Glass from the channel 14 is found to be of high quality, free of bubbles, devitrified material and reams.

## Claims

1. A glassmaking furnace comprising an elongated tank for molten glass, the said tank including in linear sequence a melting zone (21), a fining zone (23), a neck portion (12), a conditioning zone (24) and an exit channel (14) for removal of product glass, and further including a sill (11) which extends transversely across the furnace at or close to the upstream end of the fining zone (23), **characterised in that** in the direction downstream of the sill (11) the tank has a floor (6) with a shaped profile such that the depth of the tank increases progressively from the top of the sill (11) to the neck portion (12) and decreases progressively from the neck portion (12) to the exit channel (14).

2. A furnace as claimed in claim 1, wherein the tank floor downstream of the sill (11) has a smooth profile.

3. A furnace as claimed in claim 1 or claim 2, wherein the floor of the neck portion (12) is horizontal.

4. A furnace as claimed in any preceding claim, wherein the profile of the tank floor from the top of the sill (11) to the opening of the neck (12) is linear.

5. A furnace as claimed in any of claims 1 to 3, wherein the profile of the tank floor from the top of the sill (11) to the opening of the neck (12) follows a gentle convex curve from an initially relatively steep slope from the top of the sill (11) to substantially horizontal where it meets the floor of the neck (12).

6. A furnace as claimed in any preceding claim, wherein the profile of the tank floor from the neck (12) to the exit (14) is linear.

7. A furnace as claimed in any preceding claim, wherein the lateral level of the tank floor throughout its length is substantially horizontal.

## Patentansprüche

1. Glasherstellungsofen, umfassend eine lang ausgezogene Wanne für geschmolzenes Glas, wobei die Wanne in linearer Reihenfolge eine Schmelzzone (21), eine Läuterzone (23), einen eingeschnürten Abschnitt (12), eine Abstehzone (24) und einen Austrittskanal (14) zur Entfernung von Produktglas einschließt und weiter eine Schwelle (11) einschließt, welche sich quer über den Ofen bei oder nahe dem stromaufwärtigen Ende der Läuterzone (23) erstreckt, **dadurch gekennzeichnet, daß** in der Richtung stromabwärts der Schwelle (11) die Wanne einen Boden (6) mit einem derartigen Formprofil aufweist, daß die Tiefe der Wanne von der Höhe der Schwelle (11) zu dem eingeschnürten Abschnitt (12) zunehmend ansteigt und von dem eingeschnürten Abschnitt (12) zu dem Austrittskanal (14) zunehmend abnimmt.

2. Ofen nach Anspruch 1, wobei der Wannenboden stromabwärts der Schwelle (11) ein ebenes Profil aufweist.

3. Ofen nach Anspruch 1 oder 2, wobei der Boden des eingeschnürten Abschnitts (12) horizontal ist.

4. Ofen nach einem vorhergehenden Anspruch, wobei das Profil des Wannenbodens von der Höhe der Schwelle (11) zu der Öffnung der Einschnürung (12) linear ist.

5. Ofen nach einem der Ansprüche 1 bis 3, wobei das Profil des Wannenbodens von der Höhe der Schwelle (11) zu der Öffnung der Einschnürung (12) einer leichten Konvexkurve von einer anfänglich relativ steilen Steigung von der Höhe der Schwelle (11) zu im wesentlichen horizontal, wenn sie den Boden der Einschnürung (12) trifft, folgt.

6. Ofen nach einem vorhergehenden Anspruch, wobei das Profil des Wannenbodens von der Einschnürung (12) zu dem Austritt (14) linear ist.

7. Ofen nach einem vorhergehenden Anspruch, wobei das laterale Niveau des Wannenbodens über dessen Länge im wesentlichen horizontal ist.

## Revendications

1. Un four de verrerie comprenant une cuve allongée pour le verre fondu, ladite cuve incluant, dans une séquence linéaire, une zone de fusion (21), une zone d'affinage (23), un goulot (12), une zone de conditionnement (24) et un canal de sortie (14) pour le retrait du produit de verre, et incluant également un seuil (11) qui s'étend transversalement en travers du four à ou près de l'extrémité amont de la zone d'affinage (23), **caractérisé en ce qu'**en direction aval du seuil, la cuve possède une sole (6) présentant un profil moulé tel que la profondeur de la cuve augmente progressivement du sommet du seuil (11) vers le goulot (12) et diminue progressivement du goulot (12) vers le canal de sortie (14).

2. Un four tel que revendiqué dans la revendication 1. dans lequel la sole de la cuve en aval du seuil (11) a un profil évasé.

3. Un four tel que revendiqué dans la revendication 1 ou la revendication 2, dans lequel la sole du goulot (12) est horizontale.

4. Un four tel que revendiqué dans l'une quelconque des revendications précédentes, dans lequel le profil de la sole de la cuve à partir du sommet du seuil (11) jusqu'à l'ouverture du goulot (12) est linéaire.

5. Un four tel que revendiqué dans l'une quelconque des revendications de 1 à 3, dans lequel le profil de la sole de la cuve du sommet du seuil (11) jusqu'à l'ouverture du goulot (12) suit une courbe convexe douce à partir d'une pente initialement relativement abrupte depuis le sommet du seuil (11) à substantiellement horizontale là où elle rencontre la sole du goulot (12)

6. Un four tel que revendiqué dans l'une quelconque des revendications précédentes, dans lequel le profil de la sole de la cuve du goulot (12) à la sortie (14) est linéaire.

7. Un four tel que revendiqué dans l'une quelconque des revendications précédentes, dans lequel le niveau latéral de la sole de la cuve sur toute sa longueur est substantiellement horizontal.
